# NEUE EUROPÄISCHE PATENTSCHRIFT

(11) **EP 1 102 731 B2**
(45) Veröffentlichungstag und Bekanntmachung des Hinweises auf die Entscheidung über den Einspruch: **30.09.2009**
(45) Hinweis auf die Patenterteilung: 27.03.2002
(21) Anmeldenummer: 99939934.8
(22) Anmeldetag: 23.06.1999
(51) Int. Cl.: C04B 41/48

(54) **VERFAHREN ZUR ABDICHTUNG PORÖSER BAUSTOFFE UND BAUTEILE**
METHOD FOR SEALING POROUS BUILDING MATERIALS AND BUILDING COMPONENTS
PROCEDE POUR RENDRE ETANCHE DES MATERIAUX ET DES ELEMENTS DE CONSTRUCTION POREUX

(30) Priorität: 29.06.1998 DE 19828714
(43) Veröffentlichungstag der Anmeldung: 30.05.2001
(73) Patentinhaber: Pleyers, Gerd, 52146 Würselen (DE)
(72) Erfinder: Pleyers, Gerd, 52146 Würselen (DE); Littmann, Klaus, 52511 Geilenkirchen (DE)
(74) Vertreter: Schüssler, Andrea
(86) Internationale Anmeldenummer: PCT/DE1999/001825
(87) Internationale Veröffentlichungsnummer: WO 2000/000451

(56) Entgegenhaltungen:
- EP-A- 0 159 035
- EP-A- 0 381 096
- EP-B- 0 259 644
- EP-B- 0 357 886
- EP-B- 0 505 873
- DE-A- 3 601 214
- DE-A- 19 503 284
- DE-A- 19 526 151
- DE-B- 2 037 823
- GB-A- 2 240 977
- US-A- 3 980 604
- US-A- 4 330 595
- US-A- 5 268 392

## Beschreibung

Die vorliegende Erfindung betrifft ein Verfahren zur Abdichtung poröser Baustoffe. Unter Baustoffen werden dabei in der Folge auch aus solchen Baustoffen bestehende Bauteile (z. B. Mauern, Pfeiler) oder Bauwerke (z. B. Brücken) verstanden. Die Erfindung betrifft weiter eine abdichtende Zusammensetzung und insbesondere deren Verwendung in dem vorliegenden Verfahren. Anwendungsgebiet sind alle Arten von porösen Baustoffen, die in Kontakt mit Flüssigkeit stehen können.

So stehen beispielsweise erdberührte Bauteile in direktem Kontakt mit im Erdreich befindlichem Wasser. Man unterscheidet dabei zwischen den Lastfällen:
- Bodenfeuchtigkeit (im Boden vorhandenes, kapillargebundenes und durch Kapillarkräfte - auch entgegen der Schwerkraft - fortleitbares Wasser)
- nichtdrückendes Wasser (z. B. Niederschlags-, Sicker- oder Brauchwasser in tropfbarflüssiger Form, das auf die Abdichtung keinen oder nur vorübergehend einen geringfügigen hydrostatischen Druck ausübt)
- drückendes Wasser (übt auf die Abdichtung dauernd einen hydrostatischen Druck aus)

Die Abdichtung erdberührter Bauteile erfolgt bei Neubauten im Rahmen der Rohbaumaßnahme sowie nachträglich bei instandzusetzender Bausubstanz und bei fehlerhaft ausgeführten Abdichtungsarbeiten.

Im Rahmen von Neubaumaßnahmen werden Abdichtungen (z. B. von an das Erdreich grenzendem Mauerwerk) außen flächig angebracht bzw. als sogenannte Horizontalsperre in die Lagerfugen des aufgehenden Mauerwerkes installiert. Beide Maßnahmen können auch zusammen ausgeführt werden. Die konstruktive Ausführung sowie zugehörige Materialwahl werden in der DIN 18 195 "Bauwerksabdichtungen", Teile 1 bis 10, Berlin: Beuth Verlag, und den ibh-Merkblättern "Bauwerksabdichtungen mit kaltverarbeitbaren, kunststoffmodifizierten Beschichtungsstoffen auf Basis von Bitumenemulsionen 07.93" und "Bauwerksabdichtungen mit zementgebundenen starren und flexiblen Dichtungsschlämmen 03.92", Herausgeber jeweils Industrieverband Bauchemie und Holzschutzmittel e.V., Frankfurt, angegeben.

Nachträgliche Abdichtungsmaßnahmen dienen in der Regel der Instandsetzung fehlender oder schadhafter Horizontalsperren und werden gegebenenfalls in Verbindung mit einer innenliegend angeordneten Vertikalsperre ausgeführt. Der Außenbereich ist zum Zeitpunkt einer Instandsetzung normalerweise nicht oder nur mit großem Aufwand zugänglich.

Die hier aufgeführten Lastfälle gelten sinngemäß auch für nicht erdberührte Baustoffe und Bauteile, die aufgrund der Umgebungsbedingungen in Kontakt mit Wasser stehen können.

Eine Sonderstellung nehmen erdberührte Bauteile aus wasserundurchlässigem Beton (WU-Beton) ein. Hier werden die Arbeitsfugen (z. B. Wand-Boden-Anschluß) planmäßig z. B. durch Injektion im Rahmen der Rohbaumaßnahme abgedichtet.

Weitere Anwendungsgebiete sind z. B.:
- Korrosionsschutz von Stahlbeton durch Abweisen von Wasser oder Chloridlösungen (s.a. "Korrosionsschutzprinzip W" gemäß "Richtlinie für Schutz und Instandsetzung von Betonbauteilen Teile 1 bis 4", Berlin: Deutscher Ausschuß für Stahlbeton, DAfStb, 1991 - 1992)
- Schutz von porösen Baustoffen gegen umweltgefährdende Flüssigkeiten (z. B. Bauteile, die als Sekundärbarriere dienen - Tankstellen, Auffangwannen etc.)

### Stand der Technik

Der derzeitige Stand der Technik bzgl. der Abdichtungspraxis poröser Baustoffe und Bauteile kann der nachstehend aufgeführten Tabelle entnommen werden:

| Abdichtungsmaßnahme | | Materialien / Verfahren (Beispiele) |
|---|---|---|
| *Abdichtung gegen Wasser* | | |
| Neubau | Vertikalabdichtung (gegen Erdreich, flächiger Auftrag) | - Bitumendickbeschichtung (Flächenspachtelung) |
| | | - Bitumenschweißbahnen |
| | Horizontalabdichtung | - Einlage von Bitumen- oder Kunststoffbahnen in die Mauerwerkslagerfuge |
| | nachträgliche Arbeitsfugenabdichtung (WU-Beton) | - Einbetonieren von Fugenbändern |
| | | - Einlegen von Quellbändern vor Betoniervorgang |
| | | - Einlegen von injektionsschläuchen vor Betoniervorgang - Injektion mit Polyurethanen, Mikrozementsuspensionen o.ä. nach dem Betoniervorgang |
| Instandsetzung (Neubau/Altbau) | Vertikalabdichtung (innenraumseitiger, flächiger Auftrag) | - flexible bzw. starre Dichtungsschlämmen |
| | | - wasserundurchlässige Putze |
| | Horizontalabdichtung | - Horizontalschnittverfahren mit nachträglichem Einlegen von z. B. kunststoffverstärkten Bitumenbahnen |
| | | - Einrammen von Edelstahlriffelblechen |
| | | - Bohrlochinjektionsverfahren (Druck- oder drucklose Applikation von wasserlöslichen oder lösemittelhaltigen Materialien) |
| *Abdichtung gegen sonstige Flüssigkeiten* | | |
| (Neubau/Altbau) | vertikale Flächenabdichtung (Wandflächen) | - flächige Beschichtung (i.d.R. mehrlagig) |
| | horizontale Flächenabdichtung (Bodenflächen) | - flächige Beschichtung (i.d.R. mehrlagig) unter Berücksichtigung ausreichender Griffigkeit/Verschleißwiderstandsfähigkeit ggf. Kombination mit Bitumenschweißbahnen (s.a. spezielle Brückenabdichtungen) |

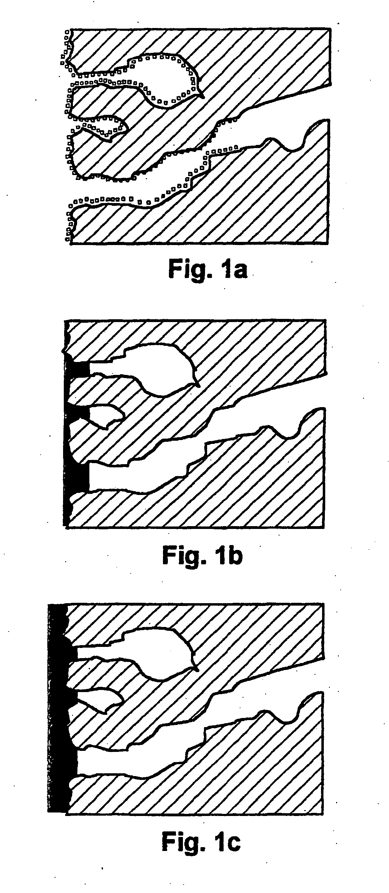

Aus der o.a. Übersichtstabelle gehen vier wesentliche Vorgehensweisen bei der Abdichtung von erdberührten Bauteilen hervor:
1) Die Abdichtung wird auf einen Untergrund (Beton, Mauerwerk etc.) aufgebracht. Bei einer gegen das Erdreich angeordneten Abdichtung wird ein "positiver Flüssigkeitsdruck" und bei einer innenseitigen Anordnung wird ein "negativer Flüssigkeitsdruck" als Lastfall angenommen. Die in diesem Bereich bisher verwendeten Materialien lassen sich in drei Gruppen untergliedern (Fig. 1). Imprägnierungen dringen ca. 1 - 30 mm in den Porenraum ein und wirken durch eine Veränderung der Oberflächeneigenschaften der Porenwandungen, ohne die Poren zu füllen oder geschlossene Filme zu bilden (Fig. 1a). Versiegelungen dringen ca. 1 - 3 mm in den Porenraum ein, füllen ihn in diesem Bereich vollständig aus und belegen die äußere Oberfläche des Baustoffs mit einem dünnen Film (Fig. 1b). Beschichtungen dringen nicht oder nur in geringem Maße in den Baustoff ein, diese Materialien wirken durch eine Schicht auf der äußeren Oberfläche des Baustoffes (Fig. 1c).
2) Die Abdichtung wird durch Injektion in einen Spalt oder Riß (WU-Beton Arbeitsfuge o.ä.) nachträglich installiert. Dabei wird der Spalt oder Riß mit einem abdichtenden Material gefüllt, das Porensystem des Baustoffes bleibt davon weitestgehend unberührt.
3) Die Abdichtung wird durch Injektion in das Porensystem nachträglich installiert; das Porensystem des Baustoffes wird soweit gefüllt, wie es der Feststoffgehalt des Injektionsgutes und die Eindringtiefe zulassen. In der Regel werden bisher Materialien eingesetzt, die das Porensystem nach ihrer Erhärtung nicht vollständig füllen können.
4) Das Porensystem wird mechanisch durchtrennt und teilweise durch undurchlässige Füllkörper ersetzt.

Alle Vorgehensweisen sind auch auf nicht erdberührte poröse Baustoffe und Bauteile, die aufgrund der Umgebungsbedingungen in Kontakt mit Wasser oder anderen Flüssigkeiten stehen können, anwendbar.

### Nachteile der derzeitigen Verfahren

Eine innenseitige Abdichtung poröse Baustoffe und Bauteile erfordert sowohl spezielle Materialien als auch konstruktive Lösungen, die es erlauben, negative Flüssigkeitsdrücke aufzufangen, d.h. den Zugbeanspruchungen durch den einwirkenden Flüssigkeitsdruck standzuhalten. Oft werden spezielle flüssigkeitsundurchlässige Beschichtungen bis zu mehreren Zentimetern dick in mehreren Schichten auf das Mauerwerk aufgetragen oder "WU-Beton Wannen", die sich über den gesamten erdberührten Innenraumbereich erstrecken, eingesetzt. Beide Verfahren erfordern einen sehr hohen Aufwand hinsichtlich Material- und Arbeitseinsatz.

Außenseitige Abdichtungen gegen Wasser werden mit bituminösen Materialien ausgeführt. Hier werden vorzugsweise sogenannte Bitumendickbeschichtungen eingesetzt, die nicht widerstandsfähig gegen äußere mechanische Einwirkungen sind und sich durch einen hohen Materialpreis auszeichnen. Schäden können z. B. durch spitze Gegenstände (Ziegelbruch etc.) verursacht werden, die beim Wiederverfüllen der Baugrube die weiche Bitumenmasse durchlöchern. Da die Beschichtungen den Porenraum nicht füllen, wird der Baustoff bei einer Beschädigung der Beschichtung direkt für Wasser zugänglich.

Außenseitige Abdichtungen gegen umweltgefährdende Flüssigkeiten werden durch aufwendige Beschichtungen ausgeführt.

Für nachträgliche Abdichtungen mit Hilfe von Injektionen werden oft niedrigviskose, zum Teil hydrophobierende, nicht porenfüllende Materialien eingesetzt. Bisher bekannte Materialien, die nach dem Prinzip der Porenfüllung arbeiten, sind nicht in der Lage, die Poren vollständig zu füllen (vgl. Pleyers, G.: Ist eine Porenverengung zur Reduzierung kapillar aufsteigender Mauerfeuchte geeignet? Stuttgart : Fraunhofer IRB Verlag, 1998. - In: Jahresberichte Steinzerfall - Steinkonservierung Band 6 1994-1996, (Snethlage, R.(Ed.)), S. 157-163, 1998). Aus den Ergebnissen eines abgeschlossenen Forschungsvorhabens geht hervor, daß sich sämtliche derzeit auf dem Markt befindlichen Injektionsmaterialien zum Zwecke der Abdichtung gegen Wasser nicht für die nachträgliche Abdichtung wassergesättigter Mauerwerke eignen (vgl. Sasse, H.R.; Pleyers, G.: Reduzierung von Mauerwerksfeuchte - Untersuchung und Entwicklung chemischer Bohrlochinjektionsverfahren als wirksame Horizontalsperre für den nachträglichen Einbau in Ziegelmauerwerk. Aachen : Institut für Bauforschung, 1997. - Forschungsbericht Nr. 496, 1997, IRB Verlag). Da bei der Ausführung von nachträglichen Abdichtungen von einem wassergesättigten Porensystem zum Zeitpunkt einer Injektionsmaßnahme ausgegangen werden muß, besteht insbesondere für diesen Bereich der Abdichtungstechnik ein Bedarf nach leistungsfähigen Materialien und Verfahren.

Die angesprochenen Beschichtungs- oder Imprägniermittel auf Basis von Epoxidharzen und/oder Polyisocyanaten und/oder Organopolysiloxanen, die dazu verwendet werden, Baustoffkörper wasserabweisend auszurüsten, sind z. B. aus der EP A 0 381 096, EP A 0 159 035, DE 195 26 151 A1, DE 195 03 284 A1, GB A 2,240,977 oder US A 4,330,595 bekannt. Sie sind entweder zu dickflüssig (Viskosität von > 1000 mPa · s) oder müssen mit erheblichen Mengen an inerten Lösungsmitteln versetzt werden.

### Aufgabe der Erfindung

- Aufgabe der Erfindung ist im wesentlichen die Abdichtung poröser Baustoffe und Bauteile.
- Alle gängigen porösen Baustoffe werden berücksichtigt, wie z. B.:
   - zementgebundene Baustoffe, wie Betone, Mörtel, Bimsbaustoffe, Porenbetone und Putze,
   - Ziegelbaustoffe, wie Hochlochziegel oder Vollziegel,
   - kalkgebundene Baustoffe, wie Kalksandsteine, Kalkputze und Kalkmörtel,
   - Natursteine, wie Sandsteine, Tuffe und Kalksteine.
- Alle in Frage kommenden Flüssigkeiten werden berücksichtigt, wie z. B.:
   - Wasser,
   - Salzlösungen,
   - umweltgefährdende Flüssigkeiten.
- Die Abdichtung soll unter allen o.a. Lastfällen (Feuchtigkeit, nichtdrückende Flüssigkeiten sowie positiver und negativer Flüssigkeitsdruck) wirken.
- Die verwendeten Materialien sollen mit allen Applikationsverfahren (z. B.: Pinselauftrag, Fluten, Spachtelauftrag, drucklose Injektion, Druckinjektion) anwendbar sein.
- Die Wirksamkeit der Abdichtung soll bei jeder Untergrundfeuchte bis hin zur Wassersättigung zum Zeitpunkt der Behandlung dauerhaft gewährleistet sein.
- Notwendige Applikationstechniken und Materialien sollen wirtschaftlicher als bisherige Verfahrensweisen eingesetzt werden können.
- Der Widerstand gegen negativen Wasserdruck soll gegenüber bekannten Systemen erhöht werden.
- Die Empfindlichkeit gegen Beschädigung (z. B. durch unsachgemäße Baugrubenverfüllung) soll gegenüber bekannten Systemen vermindert werden.
- In besonderen Fällen soll die Abdichtung zu einer Erhöhung der Verschleißfestigkeit des behandelten Bauteils und gegebenenfalls auch zur Erhöhung seiner Griffigkeit (z. B. bei befahrenen Oberflächen von Parkdecks) geeignet sein.

### Lösung der Aufgabe

Für das Eindringen in das Porensystem üblicher Baustoffe (siehe o. g. Beispiele) sind ein- oder mehrkomponentige abdichtende Zusammensetzungen zu verwenden,
(1) bestehend aus einem niedrigviskosen Stoff/ Stoffgemisch mit einer Viskosität von weniger als 100 mPa·s bei 12 °C, wobei Stoffe/ Stoffgemische auf Basis von Epoxidharzen, bestehend aus lösemittelfreien aliphatischen, mehrfunktionellen Reaktiwerdünnern und aminischen, aliphatischen Härtern vorliegen, die nach Einbringung in poröse Baustoffe durch chemische Reaktion porenfüllende Massen bilden, aushärten und nach Aushärtung mittels der anstehenden Flüssigkeit quellbar sind, oder
(2) bestehend aus einem niedrigviskosen Stoff/ Stoffgemisch mit einer Viskosität von weniger als 100 mPa·s bei 12 °C, der nach Einbringung in poröse Baustoffe durch chemische Reaktion porenfüllende Schäume bildet, aushärtet und nach Aushärtung mittels der anstehenden Flüssigkeit quellbar ist.

Der Lösungsweg sieht den vollständigen Verschluß der behandelten Baustoffporen vor, sei es durch vollständige Füllung mit den Materialien oder durch vollständige Füllung mit einem geschlossenzelligen Schaum.

Es werden erfindungsgemäß dünnflüssige Epoxidharze, bestehend aus lösemittelfreien aliphatischen, mehrfunktionellen Reaktiwerdünnern und aminischen, aliphatischen Härtern eingesetzt, die kurz vor der Applikation gemischt werden. Für Pinsel- und Spachtelauftrag kann die Konsistenz beispielsweise durch Einsatz geeigneter Stellmittel von dünnflüssig bis pastös reguliert werden.

Abhängig vom Wassergehalt des zu behandelnden Untergrundes muß weiterhin die Art der Applikation angepaßt werden. Daraus resultiert jeweils eine spezifische Art der Wirkung der Materialien.

### Trockener Untergrund (saugfähig- d.h. drucklose Tränkung, z. B. durch flächigen Auftrag oder drucklose Injektion möglich)

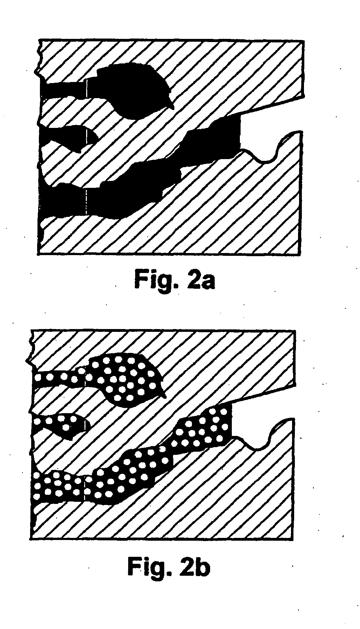

Das Abdichtungsmaterial kann in das Porensystem durch Kapillarkräfte aufgenommen werden und dort aushärten. Es bildet eine wirksame Abdichtung aus, die durch den Zutritt von Flüssigkeit noch verbessert werden kann. Das Material dringt weit in die Poren ein und erhärtet als massiver Verschluß (Fig. 2a) oder als geschlossenzelliger Schaum (Fig. 2b).

### Feuchter Untergrund (eingeschränkt saugfähig - d.h. drucklose Tränkung, z. B. durch flächigen Auftrag oder drucklose Injektion, noch möglich)

Das Abdichtungsmaterial kann in das Porensystem durch Kapillarkräfte aufgenommen werden und dort aushärten. Da die Porenwandungen zum Zeitpunkt der Applikation mit einem Wasserfilm benetzt sind, kann nur unter Berücksichtigung nachstehender Bedingungen eine wirksame Abdichtung installiert werden:

Das Abdichtungsmaterial dringt in den Porenraum ein, füllt diesen bis auf den wasserbenetzten Porenwandungsbereich auf und härtet in diesem Zustand aus. Eigene Untersuchungen haben ergeben, daß der Porenwandungsbereich nach Aushärtung des eingebrachten Materials weiterhin die kapillare Leistungsfähigkeit eines unbehandelten Porensystems hat.

Das Wassertransportvermögen insbesondere des wasserbenetzten Porenwandungsbereiches wird durch geeignete Maßnahmen oder deren Kombinationen in ausreichendem Maße reduziert. Diese können sein:
- Nach Aushärtung muß bei anstehendem Wasser ein ausreichendes Quellvermögen vorhanden sein, um den wasserbenetzten Porenwandungsbereich abdichtend zu schließen (Fig. 2 a und b).
- Bei der Aushärtung wird durch Vermischung oder chemische Reaktion das Wasser von den Porenwandungen entfernt und somit ein direkter Kontakt des Injektionsmaterials zur Porenwandung hergestellt (Fig. 2 a und b).

### Wassergesättigter Untergrund (nicht saugfähig - d.h. Druckapplikation notwendig)

Um das gewünschte Baustoffvolumen zu erreichen, muß das Abdichtungsmaterial das im Porensystem befindliche Wasser durch eine Druckinjektion verdrängen. Dabei bleibt jedoch ein unvermeidlicher Wasserfilm auf den Porenwandungen zurück. Die Situation entspricht nach der Druckinjektion der Situation nach druckloser Injektion auf feuchtem Untergrund.
- Die Materialien für die Druckinjektion müssen daher die gleichen Eigenschaften aufweisen, wie zuvor genannt, damit der in Fig. 2 a und b gezeigte Endzustand erreicht wird.
- Zusätzlich gilt, daß durch eine Druckapplikation keine übermäßige Vermischung mit dem im Porensystem vorhandenen Wasser erfolgen darf.

### Vorteile der Erfindung

- Die Erfindung ist in der Lage, jede Art poröser Baustoffe und Bauteile abzudichten, z. B.:
   - zementgebundene Baustoffe, wie Betone, Mörtel, Bimsbaustoffe, Porenbetone und Putze,
   - Ziegelbaustoffe, wie Hochlochziegel oder Vollziegel,
   - kalkgebundene Baustoffe, wie Kalksandsteine, Kalkputze und Kalkmörtel,
   - Natursteine, wie Sandsteine, Tuffe und Kalksteine.
- Die Erfindung ist in der Lage, gegen jede Art von Flüssigkeit abzudichten, z. B.:
   - Wasser,
   - Salzlösungen,
   - umweltgefährdende Flüssigkeiten.
- Die Abdichtung wirkt unter allen Lastfällen (Feuchtigkeit, nichtdrückende Flüssigkeiten sowie positiver und negativer Flüssigkeitsdruck).
- Die verwendeten Materialien sind mit allen Applikationsverfahren (z. B.: Pinselauftrag, Auftrag durch Fluten, Spachtelauftrag, drucklose Injektion, Druckinjektion) anwendbar.
- Die Wirksamkeit der Abdichtung ist bei jeder Untergrundfeuchte bis hin zur Wassersättigung zum Zeitpunkt der Behandlung dauerhaft gewährleistet.
- Für ein Einbringen mittels Druckinjektion kann insbesondere die Wirksamkeit der Abdichtung bei feuchten und wassergesättigten Porensystemen dauerhaft gewährleistet werden.
- Die Verbesserung der Wirtschaftlichkeit im Vergleich zu herkömmlichen Systemen wird gewährleistet, da es sich bei den eingesetzten Produkten um preisgünstig herzustellende Chemikalien handelt.
- Der Einsatz als flächige Abdichtung erfordert im Vergleich zu Dickbeschichtungen weit weniger Material. Die Verbesserung der Wirtschaftlichkeit im Vergleich zu herkömmlichen Systemen ist daher für diesen Anwendungsfall in besonderem Maße gegeben.
- Die Wirksamkeit und Dauerhaftigkeit beim Lastfall "negativer Wasserdruck" wird im Vergleich zu herkömmlichen Systemen aufgrund der Verankerung der Materialien im Porensystem entscheidend erhöht.
- Die Empfindlichkeit gegen Beschädigung (z. B. durch unsachgemäße Baugrubenverfüllung) ist gegenüber bekannten Systemen vermindert, da keine aufgebrachte Beschichtung, sondern eine Abdichtung im Porenraum des Baustoffes vorliegt. Der Baustoff schützt das Abdichtungsmittel vor mechanischer Einwirkung.
- In besonderen Fällen z. B. bei befahrenen Oberflächen von Parkdecks können mit einer erfindungsgemäßen Abdichtung neben dem Korrosionsschutz des Stahlbetons die Anforderungen an die Verschleißfestigkeit des behandelten Bauteils und der Griffigkeit erfüllt werden. Im Gegensatz zu herkömmlichen Verfahren ist keine zusätzliche Maßnahme (z. B. zusätzliche Lage aus Quarzsand) erforderlich.

### Beschreibung von Ausführungsbeispielen

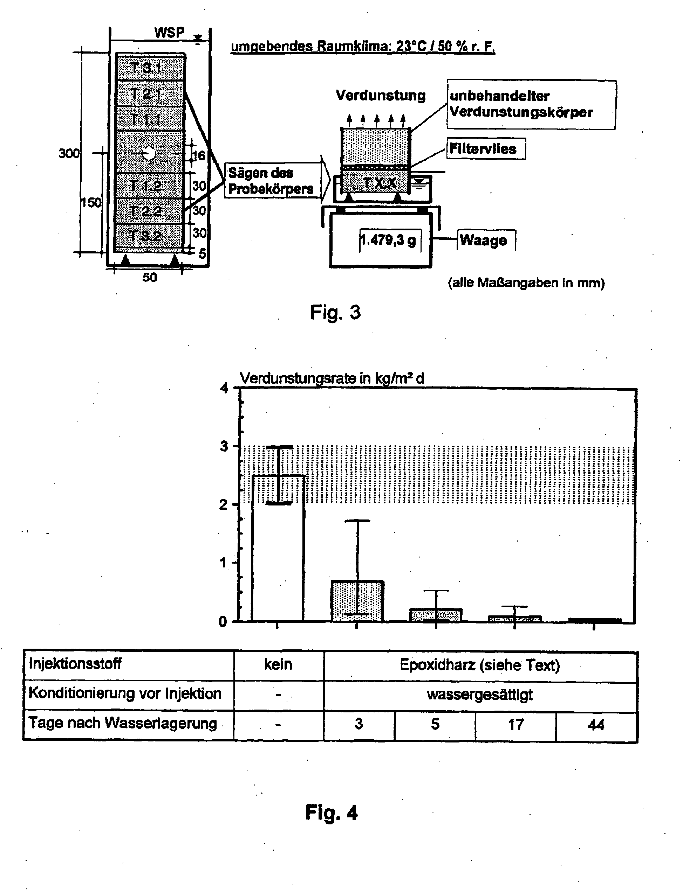

Zum Nachweis der Wirksamkeit handelsüblicher Produkte und der erfindungsgemäßen Materialien wurden Laborversuche gemäß Fig. 3 durchgeführt. Der Versuchsaufbau ist bei Sasse, Pleyers (s. o.) ausführlich dargestellt und erläutert. Der Versuch wird im Folgenden kurz skizziert.

Für diesen Versuch wurde ein dünnflüssiges, zweikomponentiges Epoxidharz, bestehend aus dem Produkt Bakelite® EPD-HD (A) mit dem Härter Rütadur® TMD (B) im Mischungsverhältnis A zu B wie 100 zu 29 Massenteile eingesetzt. Die genannten Substanzen sind Handelsprodukte der Firma Bakelite AG, 47125 Duisburg, Varziner Straße 49.

Flankenversiegelte Natursteine der Abmessungen 300mm x 50 mm x 50 mm wurden durch bis zur Massekonstanz dauernde Wasserlagerung mit Wasser gesättigt. Die wassergesättigten Natursteine wurden mit einem Injektionsdruck von rd. 6 bar in ein in der Mitte des Steines befindlichen Bohrloch injiziert (s. Fig. 3, links). Es wurde jeweils die Menge an Epoxidharz appliziert, die ausreicht, um das gesamte durch drucklose Wasseraufnahme zugängliche Porensystem des Natursteins zu füllen.

Nach anschließender 24stündiger Lagerung unter Wasser bei 23° C wurden die Probekörper, wie in Fig. 3 dargestellt, präpariert bzw. hinsichtlich Dichtheit überprüft.

Durch Wägung der wie in Fig. 3 dargestellt präparierten Steinproben kann die Leistungsfähigkeit der Scheiben aus unterschiedlichen Tiefen für den kapillaren Transport von Wasser ermittelt werden. Das in dem Behälter befindliche Wasser kann nur verdunsten, wenn es die präparierten Steinabschnitte passiert. Verdunstet kein Wasser, sind die Poren des Steins vollständig geschlossen. Die tatsächlich verdunstende Wassermenge wird zur Oberfläche der Steinprobe in Bezug gesetzt und in kg/(m² · d) angegeben.

In Fig. 4 sind die bei diesem Versuch nach 3, 5, 17 und 44 Tagen ermittelten Verdunstungsmengen im Vergleich zu der Verdunstungsmenge eines unbehandelten Steines aufgetragen.

Es ist klar ersichtlich, daß die durch den behandelten Stein transportierte Wassermenge niedriger ist als die des unbehandelten Steines und daß sie im Laufe der Zeit weiter sinkt. Das Material quillt durch das anstehende Wasser auf und senkt die Transportleistung der Poren bis auf einen Wert von rd. 0,02 - 0,03 kg/(m² · d).

Bei Sasse, Pleyers (s. o.) wurde festgestellt und ausführlich erläutert, daß die Transportleistung der Poren auf einen Wert von weniger als 0,1 kg/(m² · d) gesenkt werden muß, um die Wirkung einer Horizontalsperre im Mauerwerk sicherzustellen. Ferner wurden handelsübliche Produkte für diesen Anwendungsfall im selben Versuchsablauf getestet. Keines der untersuchten, handelsüblichen Produkte erreichte den oben genannten Grenzwert. Alle Produkte ließen Transportraten von 0,5 kg/(m² · d) und mehr zu.

Der Versuch unterstreicht deutlich die besondere Eignung des erfindungsgemäßen Verfahrens bzw. der erfindungsgemäßen abdichtenden Zusammensetzung.

## Patentansprüche

1. Verfahren zur Abdichtung poröser Baustoffe, **gekennzeichnet durch**,
- Zuführung mindestens eines niedrigviskosen, reaktiven Stoffes/Stoffgemisches mit einer Viskosität von weniger als 100 mPa·s bei 12 °C zu dem Baustoff; wobei die Stoffe/Stoffgemische auf Basis von Epoxidharzen, bestehend aus lösemittelfreien aliphatischen, mehrfunktionellen Reaktivverdünnern und aminischen, aliphatischen Härtern sind.
- im gewünschten Einwirkungsbereich Eindringenlassen dieses Stoffes/Stoffgemisches in das Porensystem des Baustoffs;
- chemische Reaktion dieses Stoffes/Stoffgemisches mit nahezu vollständiger Ausfüllung des Porensystems und **dadurch** Bildung flüssigkeitsundurchlässiger Barrieren in dem Porensystem.

2. Verfahren nach Anspruch 1, **dadurch gekennzeichnet, daß** die chemische Reaktion ein Aushärten des Stoffes/Stoffgemisches bewirkt.

3. Verfahren nach Anspruch 1, **dadurch gekennzeichnet, daß** die chemische Reaktion ein Aufschäumen und Aushärten des Stoffes/Stoffgemisches bewirkt.

4. Verfahren nach einem der vorhergehenden Ansprüche, **dadurch gekennzeichnet, daß** nach der Reaktion des Stoffes/Stoffgemisches dieses bei anstehender Flüssigkeit ein ausreichendes Quellvermögen besitzt, um nicht materialgefüllte Restvolumina der Poren abdichtend zu schließen.

5. Verfahren nach einem der vorhergehenden Ansprüche, **dadurch gekennzeichnet, daß** an den Porenwandungen befindliche Flüssigkeit durch Vermischung oder chemische Reaktion mit diesem Stoff/Stoffgemisch weitgehend entfernt wird und daß durch direkten Kontakt dieses Stoffes/Stoffgemisches mit der Porenwandung die Poren abdichtend geschlossen werden.

6. Verfahren nach einem der vorhergehenden Ansprüche, **dadurch gekennzeichnet, daß** der/das reaktive Stoff/Stoffgemisch wasserabweisend (hydrophob) ausreagiert und dadurch der Wassertransportprozeß in nicht materialgefüllten Restvolumina der Poren unterbunden wird.

7. Verfahren nach einem der vorhergehenden Ansprüche, **gekennzeichnet dadurch, daß** durch eine Druckapplikation dieses Stoffes/Stoffgemisches in wassergesättigten Untergrund keine übermäßige Vermischung mit dem im Porensystem vorhandenen Wasser, sondern eine ausreichende Verdrängung des Wassers erfolgt.

8. Abdichtende Zusammensetzung, bestehend aus einem niedrigviskosen Stoff/ Stoffgemisch mit einer Viskosität von weniger als 100 mPa·s bei 12 °C, wobei Stoffe/ Stoffgemische auf Basis von Epoxidharzen, bestehend aus lösemittelfreien aliphatischen, mehrfunktionellen Reaktiwerdünnern und aminischen, aliphatischen Härtern vorliegen, die nach Einbringung in poröse Baustoffe durch chemische Reaktion porenfüllende Massen bilden, aushärten und nach Aushärtung mittels der anstehenden Flüssigkeit quellbar sind.

9. Abdichtende Zusammensetzung nach Anspruch 8, mindestens bestehend aus einer Mischung aus Reaktivverdünnern in Form von di- oder oligofunktionellen Epoxyverbindungen und Härtern sowie gegebenenfalls Stellmitteln und anderen Hilfsstoffen.

10. Abdichtende Zusammensetzung, nach Anspruch 8 oder 9, **dadurch gekennzeichnet, daß** sie nach Einbringung in poröse Baustoffe durch chemische Reaktion porenfüllende Schäume bildet, aushärtet und nach Aushärtung mittels der anstehenden Flüssigkeit quellbar ist.

11. Verwendung einer Zusammensetzung auf Basis von Epoxidharzen mit einer Viskosität von weniger als 100 mPa·s bei 12 °C nach irgendeinem der Ansprüche 8 bis 10 zur Abdichtung poröser Baustoffe, insbesondere nach Ansprüchen 1 bis 7.

12. Verwendung nach Anspruch 11 zur Abdichtung poröser Baustoffe gegen Feuchtigkeit und gegen Wasser, Salze enthaltende Flüssigkeiten und umweltgefährdende Flüssigkeiten.

## Claims

1. A method for sealing porous building materials **characterized by**:
- feeding at least one low-viscosity reactive substance/substance mixture with a viscosity of less than 100 mPa.s at 12°C to the building material, whereby the substances/substances mixtures are based on epoxy resins consisting of solvent-free aliphatic, multifunctional reactive thinners and aminic aliphatic hardeners,
- permitting said substance/substance mixture to penetrate the pore system of the building material in the desired zone of influence; and
- chemical reaction of said substance/substance mixture with almost complete filling of the pore system, and thereby formation of liquid-impermeable barriers in the pore system.

2. The method according to claim 1, **characterized in that** the chemical reaction effects curing of the substance/substance mixture.

3. The method according to claim 1, **characterized in that** the chemical reaction effects foaming and curing of the substance/substance mixture.

4. the method according to any one of the preceding claims, **characterized in that** following the reaction of the substance/substance mixture the latter has in the presence of liquid adequate swelling power for closing in a sealing manner residual volumes of the pores not filled with material.

5. The method according to any one of the preceding claims, **characterized in that** liquid present on the walls of the pore is largely removed by mixing or chemical reaction with said substance/substance mixture; and that the pores are closed in a sealing manner by direct contact of said substance/substance mixture with the pore walls.

6. The method according to any one of the preceding claims, **characterized in that** the reactive substance/substance mixture fully reacts in a water-repelling (hydrophobic) manner and that the water transport process is stopped in residual volumes of the pores not filled with material.

7. The method according to any one of the preceding claims, **characterized in that** pressure of said substance/substance mixture in a water-saturated underground does not cause excessive mixing with the water present in the pore system, but adequate expelling of the water.

8. A sealing composition of a low-viscosity substance/substance mixture with a viscosity of less than 100 mPa.s at 12°C, whereby substance/substance mixture based on epoxide resins consisting of solvent-free aliphatic, multifunctional reactive thinners and aminic aliphatic hardener are present, said composition, upon installation in porous building materials, forms pore-filling masses by chemical reaction, cures, and is swellable upon curing by means of the liquid present.

9. The sealing composition according to claim 8 at least consisting of a mixture of reactive thinners in the form of di-or oligo-functional epoxy compounds and hardeners, and optionally adjusting agents and other adjuvants.

10. The sealing composition according to claim 8 or 9, **characterized in that** it forms, upon installation in porous building materials, pore-filling foams by chemical reaction, cures, and is swellable upon curing by means of the liquid present.

11. Use of a composition based on epoxy resins having a viscosity of less than 100 mPa.s at 12°C according to any one of claims 8 to 10 for sealing porous building materials in particular according to claims 1 to 7.

12. The use according to claim 11 for sealing porous building materials against moisture and against water, liquids containing salt, and liquids posing a hazard to the environment.

## Revendications

1. Procédé pour rendre étanche des matériaux de construction poreux, **caractérisé par**
- l'ajout au matériau de construction d'au moins un produit / mélange de produits réactif faiblement visqueux avec une viscosité inférieure à 100 mPa.s à 12°C; les produits / mélanges de produits étant à base de résines époxydes composées de diluants réactifs aliphatiques multi-fonctionnels exempts de solvants et de durcisseurs aminés aliphatiques
- la pénétration dans les zones d'intervention souhaitées de ce produit / mélange de produits dans le système poreux du matériau de construction;
- la réaction chimique de ce produit / mélange de produits avec remplissage pratiquement complet du système poreux et par conséquent formation de barrières imperméables aux liquides dans le système poreux.

2. Procédé selon la revendication 1, **caractérisé en ce que** la réaction chimique provoque le durcissement du produit / mélange de produits.

3. Procédé selon la revendication 1, **caractérisé en ce que** la réaction chimique provoque le moussage et le durcissement du produit / mélange de produits.

4. Procédé selon l'une des revendications précédentes, **caractérisé en ce que**, après la réaction du produit / mélange de produits, celui-ci possède un pouvoir de gonflement suffisant pour fermer de facon hermétique le volume restant qui n'est pas rempli de matériaux en cas de présence de liquide.

5. Procédé selon l'une des revendication précédentes, **caractérisé en ce que** le liquide présent sur les parois des pores est pratiquement entièrement éliminé en se mélangeant ou en réagissant chimiquement avec ce produit / mélange de produit et **en ce que** les pores sont fermés hermétiquement par le contact direct de ce produit / mélange de produits avec les parois des pores.

6. Procédé selon l'une des revendications précédentes, **caractérisé en ce que** le produit / mélange de produits réactif réagit en devenant hydrophobe bloquant ainsi le processus de transport de l'eau dans le volume des pores restant non rempli matériau.

7. Procédé selon l'une des revendication précédentes, **caractérisé en ce que** en appliquant sous pression ce produit / mélange de produits dans une sous-couche saturée en eau, il ne se produit pas de mélange excessif avec l'eau présente dans le système poreux, mais un déplacement suffisant de l'eau.

8. Composition pour rendre étanche composée d'un produit ou un mélange de produits réactif faiblement visqueux avec une viscosité inférieure à 100 mPa.s à 12°C; les produits ou les mélanges de produits étant à base de résines époxydes, composées de diluants réactifs aliphatiques multi-fonctionnels exempts de solvants et de durcisseurs aminés aliphatiques, qui lorsqu'ils sont appliqués dans des matériaux de construction poreux forment des masses remplissant les pores, durcissent et gonflent après durcissement au moyen du liquide présent.

9. Composition pour rendre étanche selon la revendication 8, composée d'au moins un mélange de diluants réactifs sous forme de composés époxydes di ou oligo-fonctionnels et de durcisseurs et, le cas échéant, d'agents stabilisateurs et d'autres adjuvants.

10. Composition pour rendre étanche selon des revendications 8 on 9, **caractérisée en ce qu'**elle forme, après l'application dans les matériaux de construction poreux, par une réaction chimique des mousses, qu'elle durcit et qu'elle peut gonfler après durcissement à l'aide du liquide présent.

11. Utilisation d'une composition à base de résines époxydes ayant une viscosité inférieure à 100 mPa.s à 12°C selon l'une quelconque des revendication 8 à 10 pour rendre étanche des matériaux de construction, notamment selon les revendications 1 à 7.

12. Utilisation selon la revendication 11 pour rendre étanche des matériaux de construction contre l'humidité et contre l'eau, les liquides contenant des sels et des liquides dangereux pour l'environnement.
